Europäisches Patentamt

European Patent Office

Office européen des brevets

(11) Publication number: **0 443 670 A1**

# EUROPEAN PATENT APPLICATION

(21) Application number: 91200314.2

(22) Date of filing: 14.02.91

(51) Int. Cl.⁵: **F16B 37/12**

(30) Priority: 20.02.90 IT 1942690

(43) Date of publication of application:
28.08.91 Bulletin 91/35

(84) Designated Contracting States:
AT BE CH DE DK ES FR GB GR IT LI LU NL SE

(71) Applicant: C.I.M.A. COMPAGNIA ITALIANA
MOLLE ACCIAIO S.P.A.
Via Piave 66
I-20040 Busnago, Milan(IT)

(72) Inventor: Minola, Antonio
Via Castello, 24
I-20040 Bellusco, Milan(IT)

(74) Representative: Henke, Erwin et al
Ing.Barzanò & Zanardo S.p.A. Via
Borgonuovo, 10
I-20121 Milano(IT)

(54) Lock nut having high resistance to loosening.

(57) A lock nut having excellent characteristics to resist loosening is disclosed. Said lock nut consists of an external hexagonal-shaped body (1), whose vertical side walls (5) are provided with rectangular windows (2), and which has a circular crown-shaped bottom surface (5), slightly conical towards the top of the body; inside the body there is a set of small hexagonal threaded plates (3), which are also slightly conical but with the concave configuration towards the bottom surface of the body, the bottom surface being smooth or knurled.

Fig.1

EP 0 443 670 A1

The object of the present invention relates to a nut, which in addition to suitable characteristics for easy tightening and unscrewing to the joined bolt, possesses an excellent characteristic against loosening, which makes it suitable for remaining locked even under the most severe operating conditions: for example, in particular, in the case of coupling of moving parts, or when subjected to shocks or vibrations.

The embodiment of this lock nut with excellent unloosening features shows no particular difficulties and, consequently, it involves a limited cost.

Another characteristic of the lock nut object of the present invention is that it presents no problem of seizure.

It is well known that, when tightening, a force is applied to the nut-bolt coupling which shall withstand, in working conditions, all the stresses that will tend to separate the two elements made integral with one another by the coupling itself. These stresses may come from forces applied, operating pressures, shocks and vibrations. For example, the gear shaft of a motor vehicle is subjected to axial thrust during acceleration, deceleration and shifting, together with vibrations originating from the motion of the vehicle. The nut-bolt coupling shall therefore be capable of resisting all the stresses applied.

In addition to this essential characteristic, it should be considered that the nut-bolt coupling must hold in the course of time (anti-loosening) when in operation, and must also be suitable for easy unscrewing (anti-seizure) if necessary.

The resistance to loosening of a nut-bolt coupling becomes essential when forces are applied with variable intensity or with a certain frequency, as well as in the case of vibrations.

The object of the present invention is a lock nut with high resistance to loosening which besides having excellent functionality, is so simple to be manifactured that its cost-effectiveness is assured.

The nut according to the present invention essentially consists of an external hexagonal-shaped body, so that it can be handled by a normal tightening tool, and of a set of plates in an adequate number, preferably three to five, which are externally hexagonal-shaped and internally threaded coaxial with one another and with the external body that accommodates them.

The external body is provided at its upper part with lugs which are bent to enclose the threaded plates. In the six vertical side surfaces of the external body there are six horizontal windows, one on each surface.

The bottom surface of the nut may be knurled, which would enhance the friction in the event of contact between this surface and the surface of a non-quenched mild washer with which it should come into contact.

For a better understanding of the nut according to the invention, reference is made to the attached drawings, which do not limit the scope of the invention, and describe it in more details.

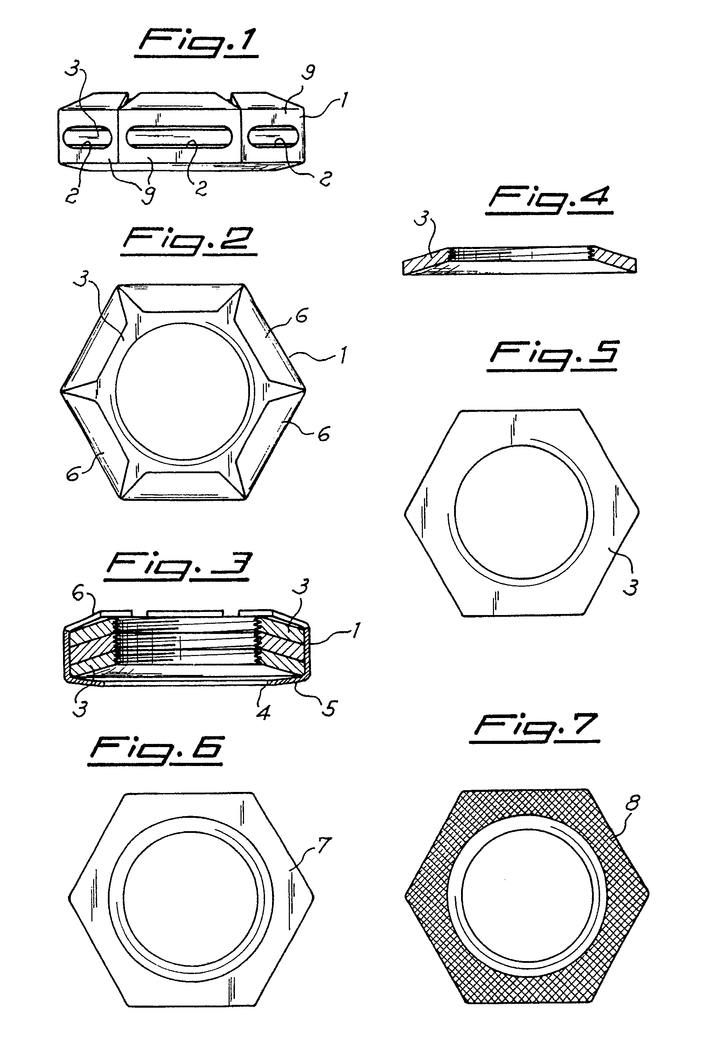

FIGURE 1 is a front view of the nut, perpendicularly with one of the 6 side surfaces;

FIGURE 2 is a top view of the nut;

FIGURE 3 is a sectional view of the nut in an axial plane containing two opposite corners of the hexagon;

FIGURE 4 is a sectional view of one of the threaded hexagonal plates in the same plane as Fig. 3;

FIGURE 5 is a top plan view of one of the threaded hexagonal plates;

FIGURE 6 is a bottom view of an embodiment of the nut with a smooth lower surface;

FIGURE 7 is a bottom view of an embodiment of the nut with a knurled lower surface.

In these Figures it can be noticed the external body 1 which, in its six vertical side walls 9, has rectangular windows 2 with rounded-off corners. The presence of these windows permits a proper quenching to obtain the desired hardness not only for the body and the end plates, but also for intermediate plates, if any; in the case of three plates, as is shown in Fig. 3, the windows permit a proper quenching of the intermediate plate.

The bottom surface of external body 1 is not flat: it develops on a slightly conical circular crown surface 5 with a circumferential edge 4, the concave configuration of the surface being towards the top of the body. This embodiment prevents the external bottom edges of the nut hexagonal body from causing so high a friction with the surface to be coupled, as to give rise to seizure problems.

As compared with a body having a flat bottom surface, the embodiment illustrated with a conical bottom surface will permit easier tightening as well as better sealing of the coupling.

As an alternative solution, the bottom of the nut may have, instead of a smooth surface 7, a knurled surface 8 to obtain greater friction between this surface and a non-quenched mild surface with which it should come into contact.

External body 1 is provided with six lugs 6 at the top, which are bent over the upper plate after inserting threaded plates 3. In this way the nut is assembled, solid and ready for quenching and then for use.

Threaded plates 3 (illustrated in Fig. 3 in the number of three) develop on a conical surface; they have a threaded inner hole and are hexagonal shaped externally, slightly smaller in size than body 1 so that they can be accommodated in it.

**Claims**

1. A lock nut with high resistance to loosening, consisting of an external hexagonal-shaped body, each of the vertical side walls ending up with a lug bent over inwardly, and of an adequate number of threaded hexagonal plates accommodated inside the body, characterized by the fact that each of the vertical side walls of the body has a window, and the bottom of the body has a circular crown-shaped surface, slightly conical and with the concave configuration towards the top of the body, and the threaded hexagonal plates develop on a slightly conical surface with the concave configuration towards the bottom surface of the body.

2. A lock nut according to Claim 1, characterized by the fact that the body bottom surface is smooth.

3. A lock nut according to Claim 1, characterized by the fact that the body bottom surface is knurled.

4. A lock nut according to Claim 2 or 3, characterized by the fact that the number of threaded hexagonal plates is from 1 to 5.

5. A lock nut according to Claim 2 or 3, characterized by the fact that the number of threaded hexagonal plates is 3.

6. A lock nut according to any of the previous Claims, characterized by the fact that the windows in the vertical side walls of the hexagonal-shaped external body are rectangular, with the greater side parallel with the bottom surface of the body, and with rounded-off corners.

*Fig.1*

*Fig.4*

*Fig.2*

*Fig.5*

*Fig.3*

*Fig.6*

*Fig.7*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 461 935  (MONTICELLI)<br>* claim 1; figures 1, 3, 4 *<br>– – – | 1,2,4,5 | F 16 B 37/12 |
| P,A | EP-A-0 371 579  (PAC-FASTENERS)<br>* column 4, lines 36 - 53; figures 1-3 *<br>– – – | 1,2,4 | |
| A | US-A-2 904 800  (PETERSON)<br>* figures 1, 6 *<br>– – – | 1 | |
| A | US-A-4 298 297  (COURSON)<br>* figure 1 *<br>– – – – – | 6 | |

TECHNICAL FIELDS
SEARCHED (Int. Cl.5)

F 16 B

The present search report has been drawn up for all claims

| Place of search | Date of completion of search | Examiner |
|---|---|---|
| Berlin | 15 May 91 | SCHAEFFLER C.A.A. |